# EUROPEAN PATENT SPECIFICATION

(11) **EP 0 589 405 B1**
(45) Date of publication and mention of the grant of the patent: **09.07.1997**
(21) Application number: 93115159.1
(22) Date of filing: 20.09.1993
(51) Int. Cl.: F02M 3/10, F16B 41/00

(54) **Carburettor needle valve adjustment limiter cap**
Kappe zur Begrenzung der Einstellmöglichkeit einer Einstellnadel eines Vergasers
Capuchon limiteur de course d'ajustement d'une aiguille de réglage d'un carburateur

(30) Priority: 23.09.1992 US 949895; 13.08.1993 US 106410
(43) Date of publication of application: 30.03.1994
(73) Proprietor: WALBRO CORPORATION, Cass City, MI 48726 (US)
(72) Inventor: Hammett, Steven L., Cass City, MI 48726 (US); Pattullo, George M., Caro, MI 48723 (US); Ross, Donald C., Cass City, MI 48726 (US); Speirs, David L., Cass City, MI 48726 (US); Swanson, Mark S., Cass City, MI 48726 (US); Van Allen, James E., Kingston, MI 48741 (US)
(74) Representative: Wehnert, Werner, Dipl.-Ing. Patentanwälte Hauck, Graalfs, Wehnert, Döring, Siemons

(56) References cited:
- FR-A- 2 291 362
- FR-A- 2 352 955
- US-A- 3 618 906
- US-A- 5 055 238
- REVUE TECHNIQUE AOTOMOBILE vol. 32, no. 372 , 1 November 1977 , BOULOGNE-BILLANCOUR FR pages 136 - 137 'Alimentation'
- REVUE TECHNIQUE AUTOMOBILE vol. 32, no. 372, 1 November 1977, BOULOGNE-BILLANCOURT FR pages 136 - 137 'Alimentation'

## Description

### Field of the Invention

This invention relates to carburetors for internal combustion engines and more particularly to a cap for limiting adjustment of fuel flow in a carburetor.

### Background

In response to relatively recent federal and state "clean air" regulations, carburetor limiter caps have been used to restrict carburetor fuel flow metering valve adjustment to prevent the excessive emission of carbon monoxide and unburned hydrocarbons from internal combustion engines. Primarily, limiters have been used with conventional float bowl carburetors to control automobile exhaust emissions. More recently their use has been extended to diaphragm-type carburetors in small engines simply to prevent gross misadjustment of fuel flow. However, future emissions regulations are expected to extend the role of limiter caps to control engine emissions.

Fuel flow within a carburetor is commonly metered during no load or idle engine operation by a first "idle" needle valve and during part or full load operation by a second "main" needle valve. Typically, each valve has a threaded cylindrical body with an enlarged knurled head at one end and a conical or needle shaped valve control surface at the opposite end which is received within an opening in the carburetor body. To calibrate fuel flow, each valve is rotatively adjusted to axially extend or retract the valve control surface within a fuel passage in the carburetor until optimum fuel flow through the passage is achieved. Pre-calibration of the carburetor on a flow test bench may be performed prior to being assembled to an engine. Subsequent overadjustment of fuel flow is prevented by affixing a limiter cap over the head of each valve. After assembly to an engine, it is customary to adjust the metering valves, if needed, to fine tune fuel flow to actual engine demand.

These limiter caps generally consist of a cylindrical body having an opening at one end for axially receiving the valve head in tight fitting engagement to prevent removal and promote rotation of both in unison. A recess in the opposite end of the cap is provided to enable an adjustment tool to engage the valve directly or the cap alone to rotate both in unison to make fuel flow adjustments. Projecting radially outwardly from the cap body is an arm for abutting against a fixed stop extending from the carburetor to limit valve rotation. Representative limiter caps are described in US-A- 3,618,906 and 5,055,238.

Stop members such as an integrally cast projection of the carburetor or the body of another cap press-fit on an adjacent needle valve may be used to limit valve and cap rotation and hence adjustment. Similarly, Japanese Patent Publication Jitsuko Sho 61-13455, discloses a hollow cylindrical collar limiter which has an outwardly extending arm for abutting directly against the head of an adjacent valve to limit adjustment.

Previous to the use of these limiting devices, fuel flow metering valves in carburetors were freely adjustable without limitation. At present, however, limiters have not been universally adopted for carburetors for small engine applications. Particularly, because of numerous difficulties, caps of conventional construction have not been used in applications, such as hand-held tools like weed trimmers, edgers, blowers, chain saws, and hedge trimmers, where carburetor access is restricted by an engine shroud enclosing the engine compartment.

While access openings are provided in the shroud by a grommet to adjust each valve, they are not large enough to allow limiter cap installation after final calibration without removing the shroud. Further, limited accessibility adds to the difficulty of accurately orienting the arm of the cap with respect to the optimum valve position and the stop or stops of the carburetor to provide the appropriate range of adjustability. Removal and reorientation of the cap after calibration with the cap secured to the valve is impractical and time consuming as it would require the application of considerable force to remove the limiter possibly damaging the cap. Production time may also be lost if the shroud or grommet must be disassembled to gain sufficient access to the cap. Unfortunately, disturbing the valve in this manner to remove the cap would likely require recalibration before reinstalling the same or a different limiter cap.

For example, if a two-stroke engine is sold with the adjustment range incorrectly set, subsequent user adjustment could increase emissions or deprive the engine of lubrication entrained in the fuel flow leading to overheating or even catastrophic failure. In any event, a user or operator of the power tool may lack the necessary range of fuel flow adjustment to keep the engine efficiently operating under the full range of temperature, humidity, altitude or other engine operating conditions which may be encountered.

With or without an enclosure or shroud, assembly and proper orientation of these caps is difficult and requires considerable dexterity. If improperly oriented, its tamper proof construction virtually prevents removal without damaging the cap and disturbing the optimum fuel flow setting of the valve.

A cap for limiting adjustment of fuel flow in a carburetor by a valve as defined in the preamble of claim 1 has become known from the document "REVUE TECHNIQUE AUTOMOBILE", Vol. 32, No. 372, pp. 136, 137. The cap disclosed therein has a radial arm engageable with a stop. The cap is movable to a first position releasably engaging the head of the shank for adjusting the valve of the carburetor and to second position in which the cap, while retained on the shank is freely rotatable relative to the shank so that the carburetor cannot be further adjusted.

### Summary of the Invention

The present invention and further developments of the invention are defined in the claims.

A cap and method for limiting the range of adjustment of a fuel flow metering valve in a carburetor. The limiter cap has a body with a passage for telescopically axially receiving the head end of a shank of the metering valve therein. At the free end, the cap may have a face with a recess or opening therein for receiving an adjustment tool to rotate the cap, valve or both. An arm projects generally radially outwardly from the body to abut against a stop carried by or operably associated with the carburetor to limit valve rotation and hence adjustment.

In the passage, the cap has a retainer which retains the cap on the valve shank in a first position while allowing the cap to freely rotate relative to the valve. The cap is axially movable on the shank to a second position where a portion in the passage firmly engages the shank so that the cap and valve rotate only in unison to thereby limit adjustment of the valve by the arm engaging a stop. Preferably, the cap is movable to a third position in which a drive portion releasably engages the shank for rotating the shank to adjust the valve before the cap is moved to the second position to limit further adjustment of the valve. Preferably, the cap is locked in the second position to prevent removal of the cap from the shank to thereby insure continuous or tamper proof limiting of further adjustment of the valve. Preferably, a cam portion in the passage facilitates movement of the cap to the second position.

In typical use, the cap is pressed onto the valve shank to a first position where it is retained on the shank and can rotate freely relative to the valve. On the shank, it may be moved from this position to releasably engage the valve for adjusting fuel flow. After carburetor performance has been optimized, the limiter arm is angularly or circumferentially positioned on the valve to provide the desired limits of user fuel flow adjustment. Once the arm is properly oriented, the cap is further pressed axially inwardly to a second position securing the cap to the valve in tight engagement therewith so the cap and valve can rotate only in unison. Any subsequent rotational adjustment of the valve is limited in either direction by the limiter arm striking a stop carried by or operably associated with the carburetor.

Preferably after carburetor performance has been optimized and before a cap is pressed axially inwardly to the second position in tight engagement with the valve shank, the cap can be circumferentially or angularly prepositioned relative to the adjusted shank to provide the desired high or low limit of user fuel flow adjustment by cooperating orienting means which are preferably in the form of a detent, web or spring associated with the cap. If desired, to prevent an end user from tampering with the needle valve and cap, they can be encircled by a shroud carried by the carburetor body.

An object of the limiter cap of this invention is to restrict adjustment of a valve to prevent excessive engine exhaust emissions and engine overheating or failure.

Another object is to facilitate quick and easy assembly of the cap to a needle valve of a carburetor body and final calibration of the carburetor while operating on an engine without requiring the removal of the grommet and engine shroud after final carburetor calibration.

Another advantage is this limiter cap may be installed after initial calibration of an assembled carburetor on a flow test bench and prior to performing final calibration of the carburetor on an engine.

A further object of the present invention is that it allows assembly of the limiter cap onto a needle valve of the carburetor to enable rotational adjustment of each valve during carburetor calibration, simple and accurate positioning of the arm of each cap relative to the final adjusted position of the valve and carburetor stops, and easy assembly of the cap into secure locking engagement with the valve to allow rotation of the cap and valve only in unison while limiting rotational adjustment of the valve in either direction.

Another object of this cap is to allow limited fuel flow adjustment to enable a user of an engine powered tool to adequately adjust carburetor performance to fine tune engine operation under a variety of operating conditions while preventing fuel flow overadjustment possibly causing excessive exhaust gas emissions or engine overheating.

A still further advantage of this invention is that it allows quick and easy limiter arm orientation when mounted in a freely rotating position on the valve to expediently, yet accurately, fix the allowable range of valve rotation.

Another advantage is that the cap may be carried on the valve during assembly without dislodging or vibrating free. These and other objects and advantages of this invention will be apparent from the following detailed description and appended claims in which the invention is set forth together with sufficient details to enable persons skilled in the art to practice the invention all in connection with the best mode presently contemplated of the invention.

### Brief Description of the Drawings

DRAWINGS accompany the disclosure and the various views thereof may be briefly described as:
**FIG. 1** is a fragmentary perspective view of a hedge trimmer having a two-stroke engine with a carburetor with fuel flow metering needle valves and limiters of this invention;
**FIG. 1A** is an exploded perspective view of the carburetor, main and idle needle valves, and limiter caps for each valve;
**FIG. 2** is an exploded side view of a needle valve and a cap in section of this invention;
**FIG. 3** is a front view of the cap;
**FIG. 4** is a sectional view of the cap assembled in a driving position on a head of the valve;
**FIG. 5** illustrates the cap assembled in a retainer position on the valve;
**FIG. 6** illustrates the cap secured in a limiter position on the valve;
**FIG. 7** is a perspective view of a carburetor assembly illustrating caps of this invention mounted on both the main and idle needle valves;
**FIG. 8** is a front view of a second carburetor configuration;
**FIG. 9** is a side sectional view of a second cap embodiment assembled in a retainer position on the valve;
**FIG. 10** is a front view of the second cap;
**FIG. 11** illustrates the second cap in a releasable driving position on the valve;
**FIG. 12** illustrates the second cap securely assembled in a limiter position on the valve;
**FIG. 13** is a side sectional view of a third cap embodiment assembled in a retainer position on a valve;
**FIG. 14** is a front view of the third cap;
**FIG. 15** illustrates the third cap securely assembled in a limiter position on the valve;
**FIG. 16** is a side sectional view of a fourth cap embodiment assembled in a driving position on the valve;
**FIG. 17** illustrates the fourth cap assembled in a retainer position on the valve;
**FIG. 18** shows the fourth cap securely assembled in a limiter position on the valve;
**FIG. 19** is a perspective view of a carburetor assembly with a separate shroud encircling the limiter caps and needle valves;
**FIG. 20** is a side view of the carburetor assembly of FIG. 19;
**FIG. 21** is a bottom view with portions broken away and in section of the carburetor assembly of FIG. 19;
**FIG. 22** is a fragmentary bottom view with portions broken away and in section of a modification of the shroud and carburetor assembly of FIG. 19;
**FIG. 23** is a fragmentary and sectional side view of a fifth cap embodiment assembled in a retainer position on the valve;
**FIG. 24** is a fragmentary and sectional side view of the fifth cap embodiment assembled in a limiter position on the valve;
**FIG. 25** is a fragmentary end view of the fifth cap embodiment;
**FIG. 25a** is an enlarged fragmentary view of that portion of the limiter caps shown in FIG. 25 enclosed by the circle 25a;
**FIG. 26** is a side view of a tool for adjusting the needle valve of the fifth cap embodiment;
**FIG. 27** is a view of one end of the tool of FIG. 26;
**FIG. 28** is an end view of the other end of the tool of FIG. 26;
**FIG. 29** is a fragmentary end view of a sixth cap embodiment;
**FIG. 29a** is an enlarged fragmentary view of that portion of the limiter caps shown in FIG. 29 enclosed by the circle 29a;
**FIG. 30** is a fragmentary and sectional side view of a seventh cap embodiment assembled in a retainer position on the valve;
**FIG. 31** is a fragmentary and sectional side view of the seventh cap embodiment assembled in a limiter position on the valve;
**FIG. 32** is a fragmentary end view of the seventh cap embodiment;
**FIG. 33** is a side view of a spring of the seventh cap embodiment; and
**FIG. 34** is an end view of the spring of FIG. 33.

### Detailed Description of the Invention and the Manner and Process of Using It

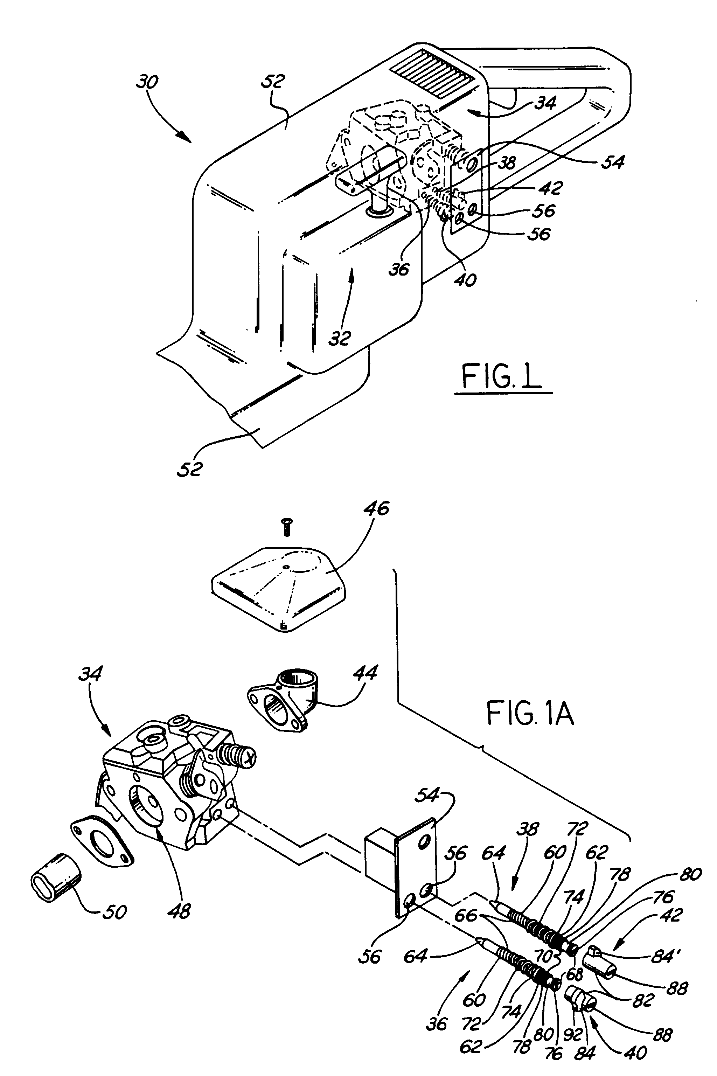

With reference to the drawings, FIGS. 1 & 1A illustrate a typical assembly of a hand-held power tool 30 such as a hedge trimmer with a two-stroke gasoline engine 32 having a carburetor 34 with idle 36 and main 38 needle valves and limiter caps 40, 42 of this invention. The idle 36 and main 38 valves meter fuel flow during low speed and high speed engine operation respectively.

The carburetor 34 has an air inlet 44 attached to an air cleaner 46 and an outlet 48 in communication with an intake manifold 50 of the engine 32. The engine 32 and carburetor 34 are enclosed by a housing or shroud 52 with a grommet 54 having a pair of access openings 56 axially aligned with each cap 40, 42 to enable limited valve adjustment while preventing tampering with or removal of either cap.

### First Embodiment

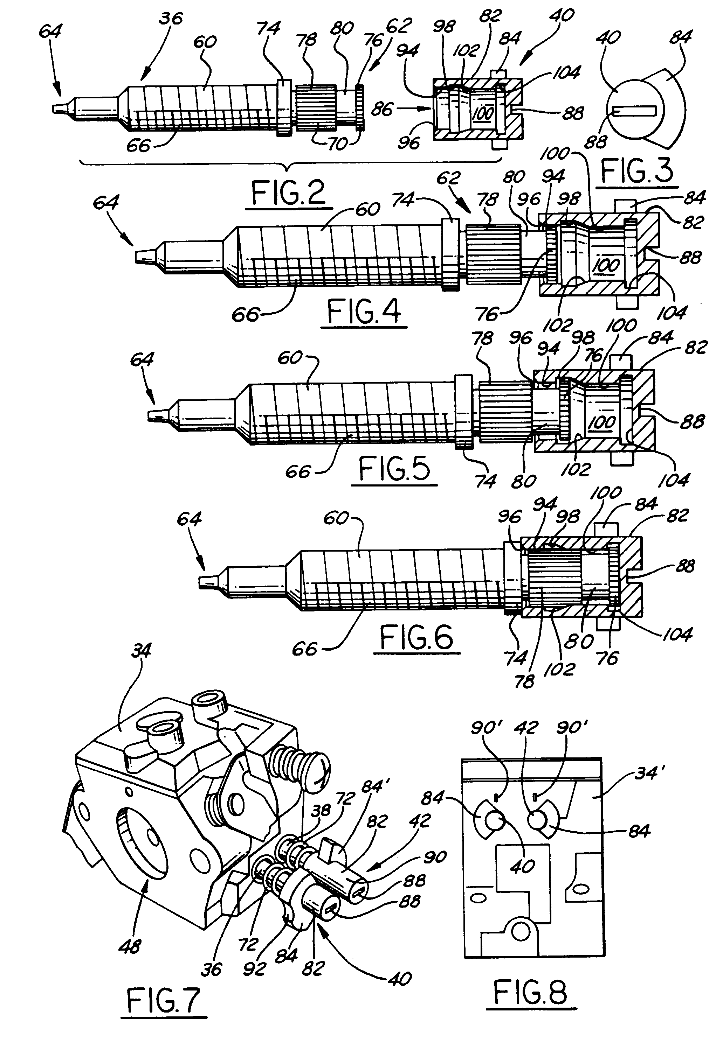

As shown in FIGS. 1A and 2, each valve 36, 38 has an elongated generally cylindrical shank 60 with a head 62 at one end and a generally conical valve control surface 64 at the other end. The shank 60 has a plurality of threads 66 about its outer periphery to engage with complementary threads (not shown) within the carburetor body to enable secure insertion of the valve 36 therein and axial adjustment of the needle valve 36 within a fuel flow passage.

Typically, a recess or slot 68 is provided in the free end of the valve 36 for receiving an adjustment tool, such as the blade of a screwdriver, for facilitating rotational adjustment of the valve 36. Alternatively, a plurality of axial ridges or knurls 70 in the outer peripheral surface of the head 62 may be engaged by a tool or manually for adjustment. Unintentional valve rotation during engine vibration is prevented by a spring 72 received over the valve shank 60 and disposed between the carburetor body 34 and a flange 74 on the valve shank 60 adjacent the head 62.

Preferably, the head 62 of each needle valve 36, 38 is separated into a first segment or shoulder 76 at the end of the valve and a second segment 78 adjacent the spring retaining flange 74 by a circumferentially continuous groove 80. Preferably, for firm engagement with the cap, the head segments 76, 78 may also be knurled with axially extending flutes. Each cap 40, 42 has a body 82 with an arm 84 projecting therefrom for limiting valve rotation and hence adjustment. The location of the arm 84, 84' on the body is the only difference between these caps. For axially telescoping the cap 40 over the end of a valve 36, the body 82 has a passage 86 therein. Portions within the passage 86 enable the cap 40 to be carried on a valve 36 in a freely rotating first position during assembly and limiter arm 84 orientation, in a second position securing the cap 40 to the valve 36 to limit adjustment and maintain emissions calibration, and in a third position to releasably drivingly engage the valve 36 to perform fuel flow adjustment. The body 82 also has a generally slotted recess 88 in the face of the free end of the cap 40 for receiving an adjustment tool therein.

The limiter arm 84 is an arcuate flanged projection which extends generally radially outwardly from the body 82 for abutting against a stop 90 carried by or operably associated with the carburetor to limit rotation to less than a complete revolution. The stop may be an adjacent valve shank, a cap mounted thereon (FIG. 7) 90, a fixed stop 90' projecting from the carburetor body (FIG. 8), a projection extending from the housing 52, grommet 54, or engine 32 (not shown), or the like. Preferably, the arm 84 is set axially back from the cap face to allow adjustment without the surrounding grommet 54 objectionably interfering with the arm 84. However, in applications where the carburetor 34 is not enclosed by a grommet 54 or shroud 52, the arm 84 may be located anywhere along the axial length of the body 82. Preferably, the angle subtended by the flange arm 84 is sufficient to limit the extent to which the valve 36 can be rotated to fine tune the engine, or to conform with any required emissions regulation. The arm 84 may have a locator indention 92 in its outer periphery to facilitate its use in an automatic cap feeding device.

As shown in FIG. 4, the cap 40 may be mounted on the valve 36 in a driving position with a first portion or circumferentially continuous rib 94 within the passage 86 adjacent the opening releasably drivingly engaging the knurled head 62. When releasably drivingly mounted in this position, the cap 40 and hence the valve 36 can be rotated in unison to perform initial calibration adjustments. The mouth of the passage 86 has a chamfer 96 to facilitate entry of the valve head 62 into the rib 94.

Frequently, however, the cap 40 is first placed on the head 62 in the retainer position shown in FIG. 5 which allows the cap 40 to rotate freely with respect to the valve 36 while retained thereon. When mounted in this position, the first segment 76 of the valve head 62 is received in a circumferentially continuous recess 98 in the passage 86 with sufficient clearance to enable free rotation. Preferably, the rib 94 of the passage 86 and the shoulder 76 of the valve 36 have an interference fit to retard removal from this freely rotating position. If desired, to releasably drivingly couple the cap 40 to the shank 60 of the valve 36 for adjusting it, the cap 40 can be pushed slightly axially inwardly to engage the chamfer 96 with the second head segment 78 to adjust the valve 36 by rotating the cap 40. When in this releasable driving position, the chamfer 102 and portion of the first rib 94 adjacent chamfer 96 within the cap passage 86 may also releasably engage the knurled first 76 and second 78 head segments respectively. Upon releasing the cap 40, it will normally return to the retainer position where it can freely rotate relative to the valve 36.

As shown in FIG. 6, to securely couple the cap 40 to the valve 36, the cap 40 may be pressed further axially onto the valve 36 so the head 62 frictionally engages and/or intermeshes with a circumferentially continuous rib in a third portion 100 of the passage 86. To facilitate insertion of the head 62 into the third portion 100, it has an inclined camming surface 102. Preferably, the rib 100 has an interference fit and when received in this position the material of the inner peripheral surfaces of the first 94 and third 100 portions deform around the knurls of the second head segment 78 to securely couple together the valve 36 and cap 40 for simultaneous rotation and to resist removal of the cap 40. An interference fit between an adjacent shoulder of a circumferentially continuous recess 104 at the end of the passage 86 and the adjacent edge of the first segment 76 of the head 62 securely locks the cap 40 to the valve 36 further preventing removal.

### Protective Shroud

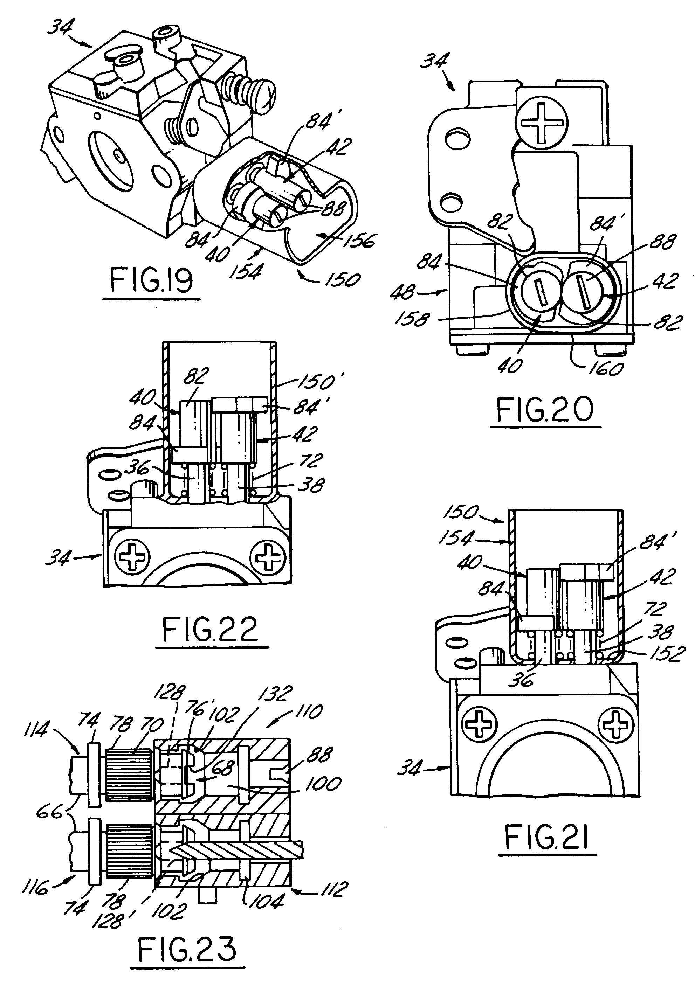

FIGS. 19-21 illustrate a protective shroud 150 for the needle valves 36 & 38 and caps 40 & 42 carried by the carburetor 48. The shroud 150 is generally in the shape of a basket or cup with a bottom wall 152, a preferably integral sidewall 154 lying closely adjacent the limiter caps, and an open end 156 opening generally axially of the limiter caps to provide access for adjustment thereof. To prevent tampering and prying with a tool on the assembled caps and valve heads, the sidewall 154 of the shroud extends axially over and beyond the caps and lies closely adjacent to the periphery of the caps. Preferably, in cross-section the sidewall is of generally oval configuration with opposed semi-circular portions 158 inter-connected by parallel portions 160 which are spaced from and lie closely adjacent to the periphery of the limiter caps. The bottom wall 152 has clearance holes 162 through which the shanks of the valves extend and in assembly is yieldably urged in firm engagement with a support surface 164 of the carburetor body by the compression springs 72. Preferably the shroud 150 is a one-piece metal stamping or a molded plastic part.

FIG. 22 illustrates a modified form of the shroud and carburetor assembly in which a shroud 150' is formed as an integral part of the body of the carburetor 34. Typically the shroud 150' and carburetor are die cast as one part of a low melting temperature metal such as aluminum.

### Second Embodiment

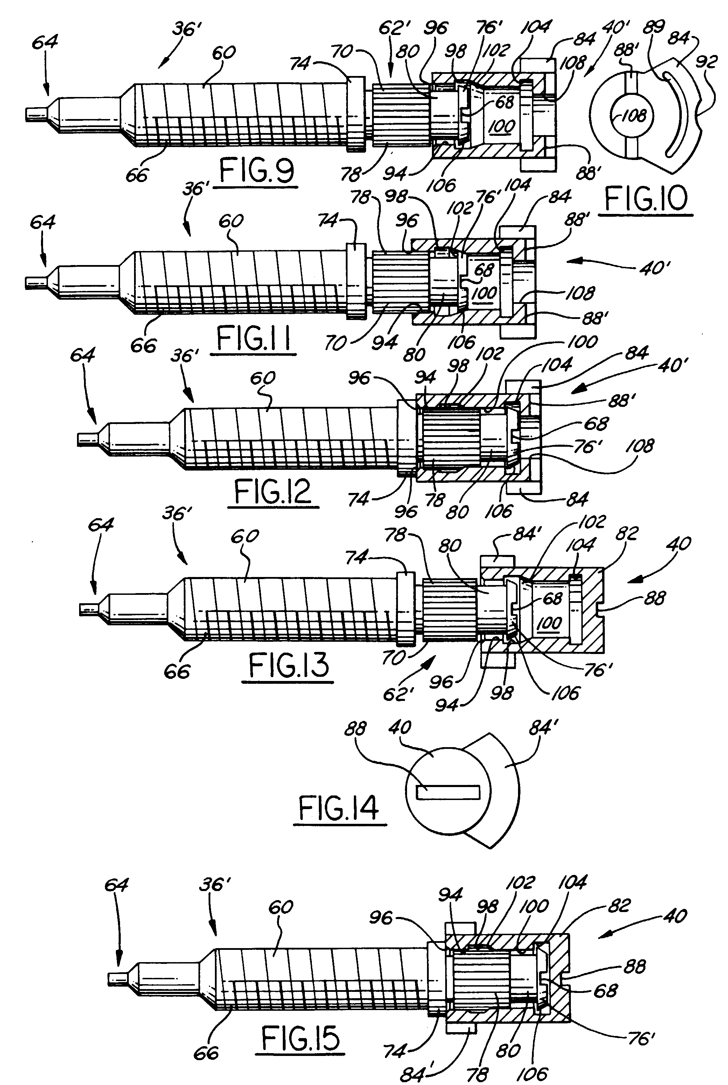

FIGS. 9-12 illustrate a second form of a needle valve 36' and a cap 40'. The needle valve 36' is essentially the same as needle 36 except that the first head segment 76' has a slot 68 therein for receiving the blade of a tool, such as a screwdriver, to rotate the valve 36' and a peripheral cam surface 106. To facilitate insertion of a tool through the cap 40' to engage the slot 68 of the needle valve 36', the body 82 has an access hole 108 through the free end thereof. In all other respects, the cap 40' has essentially the same construction as cap 40.

As shown in FIG. 9, the cap 40' can be disposed in a first position on the needle valve 36' where it is retained thereon while being freely rotatable relative to the valve 36' so that it does not drivingly engage it. As illustrated in FIG. 11, the cap 36' can be pushed slightly axially inward of this position, either manually or with a tool engaging slot 88' or an arcuate relief indentation 89 in flange 84, to releasably drivingly engage the chamfer surface 96 with the adjacent end of the second head segment 78 to drivingly turn the valve 36' by rotating the cap 40'. If necessary, a portion of the first rib 94 adjacent the chamfer 96 may also releasably engage the second head segment 78 to facilitate adjusting the valve 36'. When released, the cap 40' will normally return to the retained position (FIG. 9) where it can freely rotate relative to the valve 36'. Alternatively, the valve can be directly adjusted by inserting a tool through bore 108 and engaging slot 68. As shown in FIG. 12, the cap 40' can be pressed further axially onto the valve 36' to a second position where the valve 36' and cap 40' are securely coupled together to limit rotation of the valve 36'. If desired, fine adjustment may be made by using a tool to engage slot 88' or indention 89 in the cap or slot 68 in the first segment 76' of the valve head 62'.

### Third Embodiment

FIGS. 13-15 illustrate a third form of the invention with needle valve 36' and cap 40. Since the cap 40 has a closed free end with a driving slot 88 therein, once the cap 40 is received on the needle valve 36', the slot 88 in the head 62' of the valve 36' cannot be directly engaged to rotate the valve 36'.

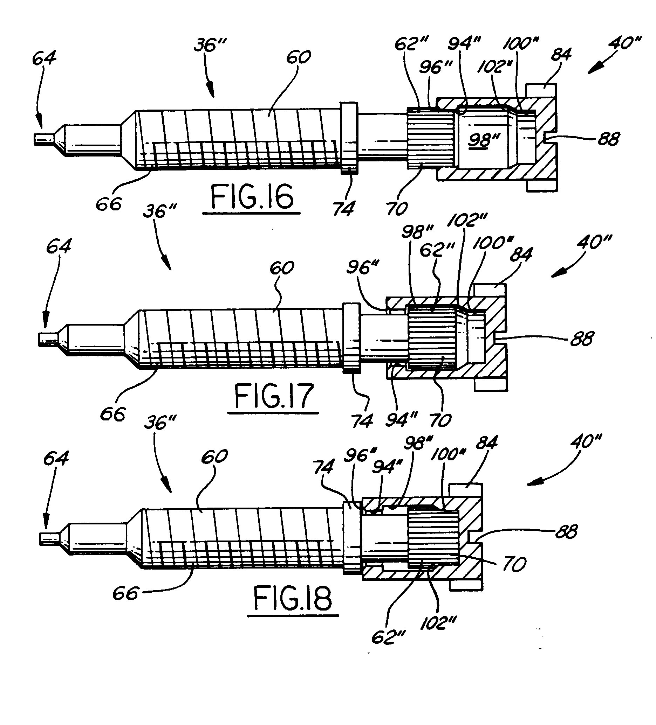

As shown in FIG. 13, in a first position the cap 40 is retained on the valve 36' while being freely rotatable relative to the valve 36' and can be pushed slightly axially inward of this position to engage the chamfered portion 96 with the head 62' to drivingly turn the valve 36' by rotating the cap 40. As shown in FIG. 15, the cap 40 can be pushed further axially onto the valve 36' to a second position to couple and secure the cap 40 and valve 36' for rotation therewith to limit adjustment of the valve 36'.

### Fourth Embodiment

A fourth form of the invention is shown in FIGS. 16-18 with a needle valve 36'' and a cap 40". As shown in FIG. 17, the cap 40'' is releasably retained and freely rotates in a first position on the valve 36'' by the cooperation of a circumferentially continuous recess 98'' in the passage of the cap 40'' and a head 62'' on the free end of the valve 36". The cap 40'' is retained on the head 62'' in the freely rotating position by the cooperation of the adjacent edge or shoulder of the recess 98'' which has a slight interference fit with the adjacent edge of the head 62". As shown in FIG. 18, in a second position, the cap 40'' is securely coupled to the valve 36'' by frictional or intermeshing engagement of the head 62'' with a third portion 100" of the passage to limit adjustment of the valve 36". Insertion of the head 62'' into the inner rib 100" is facilitated by a chamfer 102'' at the entrance thereto. As shown in FIG. 16, if desired, initially the cap 40'' can be releasably drivingly engaged with the head 62'' of the needle valve 36'' by pushing the shoulder of the first passage portion 94'' into engagement with the leading portion of the head 62". The chamfer 96'' facilitates engaging the shoulder with the head 62".

### Fifth Embodiment

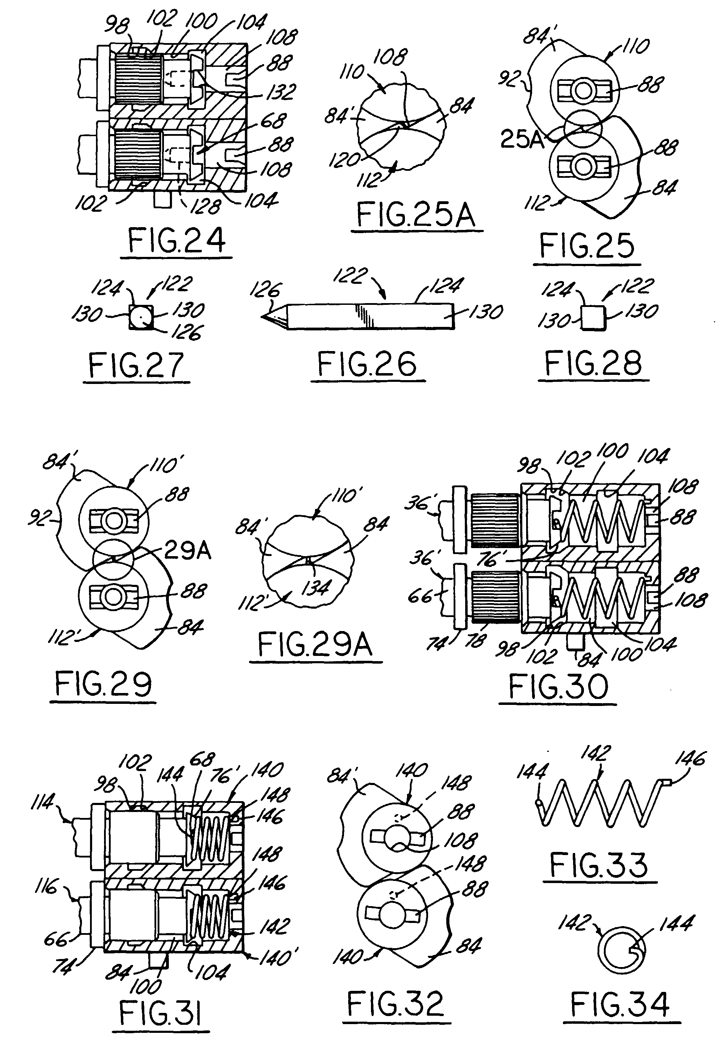

A fifth form of the invention in shown in FIGS. 23-25 with limiter caps 110 and 112 received on idle and main needle valves 114 and 116. The basic construction and arrangement of the caps 110 and 112 is substantially the same as that of the caps 40' and 42'. However, in accordance with another feature of this invention, to facilitate disposing the caps 110 & 112 in a predetermined relative circumferential or angular position with respect to the desired range of user adjustment of the needle valves (such as high end or low end of the range) before they are securely assembled in a limiter position on the valves, as shown in FIG. 25, they have cooperating detents 118 and 120 thereon. The detents project radially outwardly of the body of their cap and are axially disposed so that they overlap and abut when, as shown in FIG. 23, both of the caps are received in the first or retainer position on the valve shanks and, as shown in FIG. 25, the limiter arm 84 or 84' of each cap bears on the other cap. This ensures a predetermined orientation of each limiter cap relative to the adjusted position of its needle valve so that when, as shown in FIG. 24, the caps are assembled in the limiter position on the valve shanks, they are in a predetermined desired orientation (high end or low end) relative to the range of user adjustment they permit for each needle valve. When the user initially rotates either cap, the detents resiliently yield and one slides over the other to permit adjustment of the associated valve within the range allowed by the limiter cap. Preferably, each cap and its detent are molded in one piece of a somewhat resilient plastic material such as nylon.

### Driving Tool

FIGS. 26-28 illustrate a suitable bit or tool 122 for engaging and turning the valves 114 & 116 when a limiter cap 110 & 112 is received thereon. The tool has a square shank 124 which merges into a conical tip 126 at one end. As shown in FIG. 23 in use, the tool is inserted through the cap and the tip 126 is disposed in a chamfered blind bore 128 in the head of the valve for generally axially aligning the tool therein. A pair of opposed side faces 130 of the shank of the tool are slidably received between the side faces 132 of the slot 68 in the head for driving engagement therewith to rotate the valve by rotating or turning the tool.

### Sixth Embodiment

FIG. 29 illustrates modified limiter caps 110', 112' having a thin interconnecting web 134 in lieu of the detents 118 and 120 of the limiters cap 110 and 112. Preferably, limiter caps 110' & 112' are molded together along with the web 134 in one piece preferably of a plastic material. The caps interconnected by the web are installed on valves 114 and 116 initially in the retainer position and then after final adjustment of the valves are moved in unison to the limiter position. This orients the cap relative to the adjusted position of the valves in a manner similar to that of the detents 118 and 120 of the caps 110 and 112. Thereafter, when an end user initially rotates one of the caps, web 134 is broken and each needle valve can be adjusted within the predetermined range provided by the limiter caps.

### Seventh Embodiment

A seventh form of the invention is illustrated in FIGS. 30-32 in which a pair of limiter caps 140 & 140' are received on idle and main needle valves 114 & 116 and each disposed in a predetermined circumferential or angular orientation relative to its needle valve by the cooperation of a compression and torsion spring 142 therewith. To orient the cap, the spring has at one end a radially inwardly projecting tang 144 which in assembly is received in the slot 68 in the head of the valve and at the other end an axially projecting tang 146 which in assembly is received in a complementary blind hole 148 in the end wall of the cap. The only difference between the caps 140 & 140' is the arcuate location of the holes 148 which are relatively diametrically opposed. However, if desired, the holes could be in the same location for both caps and the spring tangs 144 would be received in relatively opposite ends of the valve head slots 68.

When received in the first or retainer position on a valve, the cap can be disposed in any desired predetermined circumferential orientation relative to its valve by selecting and designing the desired circumferential or angular orientation of the spring tang 144 & 146 to each other and to the slot 68 in the valve and the hole 148 in the cap. For example, as shown in FIG. 32, these parameters can be selected and adjusted so that after any fine tuning adjustment of the valves, the caps will be oriented in the retainer position so that the limiter arm 84 or 84' of each cap bears on the body of the other cap when, as shown in FIG. 32, the caps are to be securely assembled in the limiter position on the valves.

### Assembly and Use

In use, the caps may be pressed onto the valve 36 to a position where the first segment 76 of the valve head 62 engages with the rib 94 of the cap passage 86. While in this position, the valve 36 may be adjusted, such as during flow testing or final calibration. To adjust the valve 36, torque is applied to the cap 40 through an adjustment tool engaging the cap recess 88.

Usually, however, the cap 40 is initially mounted to and carried by the valve 36 in the freely rotating retainer position. Advantageously, the cap 40 may be attached in this retainer position any time after flow testing so that the carburetor 34 may be shipped or other assembly operations performed without inadvertently disturbing the valve calibration. For example, it may be desirable to assemble the grommet 54, shroud 52 or both after attaching the cap 40 in this retainer position. During this stage of assembly, fine adjustment of fuel flow to tune an actual specific engine in operation into compliance with emissions requirements may be simply and easily achieved.

To fine tune fuel flow while in the freely rotating retainer position, the slotted cap face 88 is engaged by an adjustment tool and a sufficient axially inward force is applied against the cap 40 causing the first passage section 94 to releasably engage the knurled second segment 78 enabling rotation in unison. While engaged, the cap 40 and valve 36 may be rotated until engine exhaust emissions fall within the desired range. If the limiter arm 84 abuts against a stop 90 and more adjustment is needed, the applied force can be withdrawn releasing the cap 40 from frictional engagement and the arm 84 freely rotated away from the stop 90 without rotating the valve 36 to provide an additional range of adjustment. To further adjust the valve 36, sufficient force may be once again applied to engage the head 62 and a torque applied to rotate the cap 40 and valve 36 in unison. In this manner, the cap 40 may be used to ratchet the valve 36 in either direction to provide an unlimited range of adjustment. However, if the cap 40', 110, 112, 140 or 140' has a through-opening 108, emissions calibration may also be performed at this assembly stage simply by directly engaging the valve 36, 36', 114 or 116 with an adjustment tool.

Before securing a cap to a valve, the cap (other than cap 110', 112') is freely rotated to easily and accurately orient the limiter arm 84 or 84' relative to the calibrated valve and stop member. To stay within emissions restrictions while allowing sufficient end user adjustment to keep the engine efficiently operating, the limiter arm position, arm flange width and stop configuration and position are selected, designed and constructed as will be apparent to skilled persons and need not be described in further detail.

The caps 110 & 112, 110'& 112' and 140 & 140' may be readily circumferentially oriented relative to their completely calibrated valves, stop members and the desired allowable range of adjustment by the end user by their detents 118 & 120, web 132, or cooperating springs 142. For example, the caps 110 and 112 may be so oriented by engagement of their arms and the detents 118 and 120, as shown in FIG. 25, so that if their needle valves have right-hand threads, the caps are oriented at the high end or max low rate of the desired range of adjustment by the end user. The same orientation is achieved for the caps 110'& 112' by the web 134 and for the caps 140 & 140' by cooperation by the springs 142. It will be apparent to skilled persons that the positions of the arms of these caps relative to their associated detents, web or springs can also be selected, designed and constructed to position them at the low end or at an intermediate position in the desired range of adjustment by the end user, and hence need not be described in further detail.

Once the limiter arm 84 or 84' is circumferentially or angularly positioned on the valve, a force is applied to axially move the cap into firm frictional engagement with the knurled head 62 or 62' preventing removal and tampering. Optionally, valve adjustment may be performed after final cap assembly if the allowable range of rotation is sufficient to properly calibrate fuel flow. In this final position, valve (36, 36', 114 or 116) rotation in either direction is restricted by the arm 84 or 84' abutting with a stop 90 or 90' preventing emissions-violating overadjustment by an end user while enabling a sufficient adjustment range to fine tune engine performance in response to a wide range of operating conditions.

Preferably, the limiter caps are of one piece, unitary construction for simpleness and ease of manufacture, and are constructed from a generally homogeneous material such as Zytel® or Minlon®, nylon formulations which are both registered trademarks of E. I. Du Pont De Nemours and Company, a different nylon formulation, Delrin® (a POM thermoplastic) also a Du Pont material, or another high temperature thermoplastic material. A cap constructed of any of these materials is strong and resilient and able to deform around the knurls of the valve head to more positively frictionally secure the cap to the valve while resisting brittle fracture if tampered with. More generally, however, the caps could also be composed of a phenolic, polyurethane, polyacrylic, rubber or some other plastic material.

## Claims

1. A cap (40; 42) for limiting adjustment of fuel flow in a carburetor (34) by a valve (36; 38) having a rotatable shank (60) with a head (62) end projecting from the carburetor comprising: a body (82) having a passage (86) therein constructed to be telescopically received over the head end of the shank of the valve, a first retainer (94) in said passage and constructed to retain said body in a first telescoped position on the shank with the shank being freely rotatable relative to said body, an arm (84) fixed to said body and projecting generally radially thereof and being engagable with at least one stop (90) and characterized by a second retainer (100) in said passage and constructed to engage with the head end when said body is telescoped over the shank in a second position axially spaced from said first position to securely retain said body on the shank in the second position so that the shank and said body can rotate only in unison and said arm limits the extent of rotation of the shank to less than one revolution when said body is in said second position by engagement of said arm with said at least one stop operably associated therewith, and an orienting element (118; 134; 142) connected to said body and constructed to angularly orient said arm of said cap relative to the shank of the valve and said at least one stop operably associated with said arm when the cap is in said first position on the shank and while the cap is being moved to the second position on the shank to secure the shank with the body of the cap in a predetermined angular orientation, whereby when said body is telescoped over the shank and in said first position the shank can rotate to adjust the fuel flow and the orienting element (118; 134; 142) will angularly orient the body relative to the shank and the stop to provide the desired limits of any subsequent adjustment after the body is in the second position, and when in said second position said body and the shank are securely engaged and can only be rotated in unison with said arm being engagable with said at least one stop to limit the rotation of the shank and cap to less than one complete revolution to thereby permit and permanently limit further adjustment of the valve.

2. The cap of claim 1 characterized by said orienting element comprising a detent (118) carried by said body (82), projecting radially outwardly thereof, and constructed and arranged to cooperate with a complementary detent (120) of another cap received on a rotatable shank (60) of another valve when said detent and another detent are operably engaged.

3. The cap of claim 1 characterized by said orienting element comprising a relatively thin web (134) connected to said cap (110') and to another cap (112') received on a rotatable shank (60) of another valve.

4. The cap of claim 1 characterized by said orienting element comprising a spring (142) received in the cap (140) with one end connected to the cap and the other end connected with the head of the shank of the valve.

5. The cap of claim 1 characterized by said orienting element comprising a spring (142) received in the cap (140) and having one end received in a complementary hole (148) in the cap and the other end received in a groove (68) in the head of the shank of the valve.

6. The cap of claim 1 characterized by said passage (86) extending completely through said body (82) and being constructed and arranged to permit an adjustment tool to be disposed therein and engaged with a recess (68) in the head (62) end of the shank (60) which has a non-circular cross-section for rotating the shank relative to the carburetor when the cap is telescopically received on the shank.

7. The cap of claim 1 characterized by said passage (86) extending completely through said body (82) and being constructed and arranged to permit an adjustment tool to be disposed therein and engaged with a slot (68) in the head (62) end of the shank for rotating the shank relative to the carburetor when the cap is telescopically received on the shank.

8. The cap of claim 1 characterized by a recess (88) in an end of said body (82), having a non-circular cross-section and constructed and arranged to receive a tool therein for rotating the cap relative to the carburetor.

9. The cap of claim 1 or 8 wherein when said body (82) is telescoped over the shank (60) and in a third position axially displaced from said first and second positions, said body (82) drivingly engages the shank so that rotating said body also rotates the shank in unison therewith to adjust fuel flow of the carburetor.

10. The cap of claim 1 or 8 characterized by a drive in said passage (86) constructed and arranged to engage with the shank (60) for drivingly rotating the shank in unison with rotation of said body (82) when said body is telescoped over the shank and in a third position thereon axially spaced from both said first and second positions, whereby when said body is in the third position rotation of said cap by a tool disposed in said recess of said body drivingly rotates the shank (60) of the valve to adjust fuel flow of the carburetor.

11. The cap of claim 1 characterized by a locator notch (92) in the outer periphery of said arm (84) for facilitating the location and orientation of the cap for assembly.

12. The cap of claim 1 characterized by at least one stop (90) carried by the carburetor comprising a shank (60) of another fuel flow adjusting valve of the carburetor which projects into the arcuate path of rotation of said arm (84) of said body at least when said body (82) is in its second position.

13. The cap of claim 1 characterized by at least one stop (90) carried by the carburetor comprising a body (82) of another limiter cap telescopingly received over a shank (60) of another fuel flow adjusting valve of the carburetor which projects into the arcuate path of rotation of said arm (84) of said body at least when said body is in its second position.

14. The cap of claim 1 characterized by said body (82), arm (84) and orienting element (118;134) being of one homogeneous piece of a plastic material which is at least somewhat resilient.

15. The cap of claim 1 characterized by a shroud (52) carried by the carburetor (34), encircling the valves (36, 38) and the caps (40, 42) received thereon, spaced from and lying closely adjacent to the periphery of the caps, extending axially outwardly of the caps, and opening generally axially outwardly to provide access to the free ends of the caps.

16. The cap of claim 1 characterized by said body (82) and arm (84) being of one homogeneous piece of a nylon or polyxoymethylene plastic material which is at least somewhat resilient.

17. The cap of claim 1 characterized by said second retainer (100) having a press fit with the shank (60) when said body (82) is in said second position on the shank.

18. The cap of claim 1 characterized by a recess (88) in an end of said body (82), having a non-circular cross-section and constructed and arranged to receive a tool therein for rotating the cap relative to the carburetor, and wherein when said body is telescoped over the shank (60) and in a third position axially spaced from said first and second positions, a drive in said passage (86) engages the shank for rotating said body and the shank in unison therewith when in said third position to adjust fuel flow of the carburetor, and a latch in said passage and constructed and arranged to latch with the shank when said body is in said second position to retard removal of the cap from the valve.

19. A method of adjusting the fuel flow of a carburetor and limiting further adjustment thereof comprising:
(a) providing a carburetor (34) having at least one valve (36) for adjusting fuel flow by rotating a shank (60) of the valve projecting from the carburetor,
(b) placing the carburetor in a test stand and rotating the shank to adjust fuel flow to a desired predetermined valve, and characterized by
(c) providing a limiter cap (40) according to claim 1 having a body (82) with a passage (86) therein constructed and arranged to be telescopically received over an end of the shank, the body having a first retainer (94) in the passage constructed and arranged to retain the body in a first position on the shank with the shank being freely rotatable relative to the body, a second retainer (100) in the passage and constructed and arranged to engage with the shank when the body is telescoped over the shank and in a second position axially spaced from the first position to securely couple the shank with the body and permanently retain the body in the second position so that the shank and body can rotate only in unison when the body is in the second position, an arm fixed to the body and projecting generally radially therefrom and constructed and arranged to limit the extent of rotation of the shank to less than one revolution when the body is telescoped over the shank and in the second position by engagement of the arm with at least one stop carried by the carburetor, and an orienting element (118; 134; 142) operably associated with said body and constructed and arranged to angularly orient said arm of said cap relative to the shank of the valve and the one stop operably associated with said arm when the cap is in said first position on the shank and while the cap is being moved from the first position to the second position on the shank to permanently couple the shank with the body of the cap in a predetermined angular orientation,
(d) positioning the cap on the shank with the body telescoped over the shank and in the first position thereof on the shank,
(e) mounting the carburetor on an engine with which it will be utilized,
(f) thereafter while operating the engine making any further needed adjustment of the valve by rotating the shank to fine tune fuel flow to optimize predetermined operating parameters of the engine,
(g) utilizing the orienting element to angularly orient the cap while in the first position on the shank in a predetermined angular position relative to the fine tuned fuel flow position of the shank resulting from step (e), and
(h) after step (g) moving the body to the second position on the shank to thereby limit the extent of any subsequent adjustment of the valve by the arm of the cap bearing on at least one stop carried by the carburetor and disposed in the arcuate path of movement of the arm at least while the cap is in the second position on the shank.

20. The method of claim 19 characterized by after the cap (40) is disposed in the first position on the shank (60) and before the fine tuning of the carburetor, the steps of disposing a shroud (52) around the carburetor (34) which has an access hole therein spaced from and generally axially aligned with the shank when the shroud is disposed in a predetermined position and thereafter without removing the shroud steps (f), (g) and (h) are performed.

21. The method of claim 19 characterized by a drive element in the passage (86) of the body (82) and constructed to releasably engage the shank (60) when the body is telescoped over the shank and in a third position axially spaced from the first and second positions to releasably couple the shank with the body so that the cap (40) can rotate the shank when the body is in the third position, moving the body over the shank to the third position, rotating both the cap and valve shank in unison to adjust fuel flow until the arm (84) of the body abuts against at least one stop (90) carried by the carburetor, moving the cap to the first position on the shank, freely rotating the cap relative to the valve shank to rotate the arm away from at least one stop carried by the carburetor, moving the cap to the third position on the shank, rotating the cap and valve shank in unison to adjust fuel flow, and thereafter moving the cap to the second position on the shank.

22. The method of claim 19 characterized by the head (62) of the shank (60) having a non-circular recess (68) therein opening generally axially thereof and in performing step (f) an adjustment tool (122) is inserted generally axially through the free end of the cap (40) and into driving engagement with the recess in the head of the valve to make any further needed adjustment of the valve by rotating the shank of the valve while the cap is received in the first position thereon.

23. The method of claim 19 characterized by before the cap (40) is disposed in the first position on the shank (60) and before the fine tuning of the carburetor, the steps of disposing a shroud (52) around the valve shank which has an access opening therein spaced from and generally axially aligned with the shank when the shroud is disposed on the carburetor, thereafter inserting the cap through the access opening and disposing the cap in the first position on the shank and within the shroud, and thereafter without removing the shroud steps (f), (g) and (h) are performed.

## Patentansprüche

1. Kappe (40;42) zur Begrenzung der Einstellung des Kraftstoffdurchflusses in einem Vergaser (34) durch ein Ventil (36;38), das einen drehbaren Schaft (60) mit einem vom Vergaser abstehenden Kopfende (62) aufweist, mit: einem einen Kanal (86) aufweisenden Körper (82), der so ausgebildet ist, daß er teleskopierbar auf das Kopfende des Ventilschaftes aufsetzbar ist, einem in dem Kanal vorgesehenen ersten Halter (94), der so ausgebildet ist, daß er den Körper in einer ersten Position teleskopierbar auf dem Schaft hält, wobei der Schaft relativ zu dem Körper frei drehbar ist, einem Arm (84), der an dem Körper festgelegt ist und radial von diesem absteht und mit mindestens einem Anschlag (90) in Anlage bringbar ist, und gekennzeichnet durch einen in dem Kanal vorgesehenen zweiten Halter (100), der so ausgebildet ist, daß er mit dem Kopfende in Eingriff steht, wenn der Körper teleskopartig auf dem Schaft in einer zu der ersten Position axial beabstandeten zweiten Position angeordnet ist, um den Körper auf dem Schaft in der zweiten Position sicher zu halten, so daß der Schaft und der Körper nur gemeinsam drehbar sind und der Arm das Ausmaß der Drehbewegung des Schaftes auf weniger als eine Umdrehung begrenzt, wenn sich der Körper in der zweiten Position durch Anlage des Arms an dem zugeordneten Anschlag befindet, und ein Orientierungselement (118;134;142), das mit dem Körper verbunden und so ausgebildet ist, daß es den Arm der Kappe relativ zu dem Schaft des Ventils und dem dem Arm zugeordneten Anschlag winkelmäßig ausrichtet, wenn sich die Kappe in der ersten Position auf dem Schaft befindet und die Kappe in die zweite Position auf dem Schaft bewegt wird, um den Schaft zu sichern, wobei der Körper der Kappe eine vorgegebene winkelmäßige Ausrichtung hat, so daß sich der Schaft, wenn der Körper teleskopartig auf dem Schaft in der ersten Position angeordnet ist, drehen kann, um den Kraftstoffdurchfluß einzustellen, und das Orientieningselement (188;134;142) den Körper relativ zu dem Schaft und dem Anschlag winkelmäßig orientiert, um die Sollgrenzen einer anschließenden Verstellung festzulegen, nachdem sich der Körper in der zweiten Position befindet, und der Körper und der Schaft in der zweiten Position gesichert miteinander in Eingriff stehen und nur gemeinsam drehbar sind, wobei der Arm an dem betreffenden einen Anschlag anliegt, um die Drehbewegung des Schaftes und der Kappe auf weniger als eine vollständige Umdrehung zu begrenzen und dadurch eine weitere Verstellung des Ventils zu ermöglichen und permanent zu begrenzen.

2. Kappe nach Anspruch 1, dadurch gekennzeichnet, daß das Orientierungselement ein von dem Körper (82) getragenes Arretierungsglied (118) ist, das von diesem radial nach außen vorsteht und so ausgebildet und angeordnet ist, daß es mit einem komplementären Arretierungsglied (120) einer anderen Kappe zusammenwirkt, die auf einem drehbaren Schaft (60) eines anderen Ventils angeordnet ist, wenn das besagte Arretierungsglied und das andere Arretierungsglied aneinander angreifen.

3. Kappe nach Anspruch 1, dadurch gekennzeichnet, daß das Orientierungselement aus einem relativ dünnen Steg (34) besteht, das mit der Kappe (110') und einer weiteren Kappe (112') verbunden ist, die auf einem drehbaren Schaft (60) eines anderen Ventils sitzt.

4. Kappe nach Anspruch 1, dadurch gekennzeichnet, daß das Orientierungselement aus einer Feder (142) besteht, die in der Kappe (140) so angeordnet ist, daß ein Ende mit der Kappe und das andere Ende mit dem Kopf des Ventilschaftes verbunden ist.

5. Kappe nach Anspruch 1, dadurch gekennzeichnet, daß das Orientierungselement aus einer Feder (142) besteht, die von der Kappe (140) aufgenommen wird und mit einem Ende in einem komplementären Loch (148) der Kappe und mit dem anderen Ende in einer Nut (68) im Kopf des Ventilschaftes sitzt.

6. Kappe nach Anspruch 1, dadurch gekennzeichnet, daß sich der Kanal (86) vollständig durch den Körper (82) erstreckt und so ausgebildet und angeordnet ist, daß ein Einstellwerkzeug darin angeordnet und mit einer Ausnehmung (68) im Kopfende (82) des Schaftes in Eingriff gebracht werden kann, um den Schaft relativ zu dem Vergaser zu drehen, wenn die Kappe teleskopierbar auf dem Schaft angeordnet ist.

7. Kappe nach Anspruch 1, dadurch gekennzeichnet, daß sich der Kanal (86) vollständig durch den Körper (82) erstreckt und so ausgebildet und angeordnet ist, daß ein Einstellwerkzeug darin angeordnet und mit einem Schlitz (68) in dem Kopfende (62) des Schaftes in Eingriff gebracht werden kann, um den Schaft relativ zu dem Vergaser zu drehen, wenn die Kappe teleskopierbar auf dem Schaft angeordnet ist.

8. Kappe nach Anspruch 1, gekennzeichnet durch eine Ausnehmung (88) in einem Ende des Körpers (82), die einen nicht kreisförmigen Querschnitt hat und so ausgebildet und angeordnet ist, daß sie ein Werkzeug zum Drehen der Kappe relativ zum Vergaser aufnehmen kann.

9. Kappe nach Anspruch 1 oder 8, bei der der Körper (82), wenn er teleskopierbar auf dem Schaft (60) in einer zu der ersten und zweiten Position axial verschobenen dritten Position angeordnet ist, mit dem Schaft drehfest verbunden ist, so daß durch Drehen des Körpers der Schaft gemeinsam mit diesem gedreht wird, um den Kraftstoffdurchfluß des Vergasers zu verstellen.

10. Kappe nach Anspruch 1 oder 8, gekennzeichnet durch einen im Kanal (86) vorgesehenen Mitnehmer, der so ausgebildet und angeordnet ist, daß er mit dem Schaft (60) in Eingriff steht, um den Schaft bei einer Drehung des Körpers (82) mitzudrehen, wenn der Körper teleskopartig auf dem Schaft in einer zu der ersten und zweiten Position axial beabstandeten dritten Position angeordnet ist, so daß, wenn sich der Körper in der dritten Position befindet, eine Drehung der Kappe durch ein in der Ausnehmung des Körpers angeordnetes Werkzeug den Schaft (60) des Ventils mitdreht, um den Kraftstoffdurchfluß des Vergasers zu verstellen.

11. Kappe nach Anspruch 1, gekennzeichnet durch eine Positionierungsnut (92) im Außenumfang des Arms (84) zur leichteren Positionierung und Orientierung der Kappe bei der Montage.

12. Kappe nach Anspruch 1, gekennzeichnet durch mindestens einen vom Vergaser getragenen Anschlag (90) in Form eines Schaftes (60) eines anderen Kraftstoffdurchfluß-Einstellventils des Vergasers, welcher in die gekrümmte Drehbahn des Arms (84) des Körpers zumindest dann vorsteht, wenn sich der Körper (82) in seiner zweiten Position befindet.

13. Kappe nach Anspruch 1, gekennzeichnet durch mindestens einem vom Vergaser getragenen Anschlag (90) in Form eines Körpers (82) einer anderen Begrenzerkappe, die teleskopartig auf einen Schaft (60) eines anderen Kraftstoffdurchfluß-Einstellventils des Vergasers angeordnet ist, welcher in die gekrümmte Bahn der Drehbewegung des Arms (84) des Körpers zumindest dann vorsteht, wenn sich der Körper in seiner zweiten Position befindet.

14. Kappe nach Anspruch 1, dadurch gekennzeichnet, daß der Körper (82), der Arm (84) und das Orientierungselement (118;134) aus einem homogenen Teil aus Kunststoff bestehen, das zumindest etwas elastisch ist.

15. Kappe nach Anspruch 1, gekennzeichnet durch eine von dem Vergaser (34) getragene Verkleidung (52), die die Ventile (36,38) und die auf diesen angeordneten Kappen (40,42) umgibt, zu dem Umfang der Kappen beabstandet und eng benachbart zu diesen angeordnet ist, von den Kappen axial nach außen verläuft und sich axial nach außen öffnet, um eine Zugangsmöglichkeit zu den freien Enden der Kappen zu schaffen.

16. Kappe nach Anspruch 1, dadurch gekennzeichnet, daß der Körper (82) und der Arm (84) aus einem homogenen Teil aus Nylon- oder Polyoxymethylen-Kunststoff bestehen, der zumindest etwas elastisch ist.

17. Kappe nach Anspruch 1, dadurch gekennzeichnet, daß der zweite Halter (100) mit Preßsitz auf dem Schaft (60) sitzt, wenn der Körper (82) in der zweiten Position auf dem Schaft angeordnet ist.

18. Kappe nach Anspruch 1, gekennzeichnet durch eine Ausnehmung (88) an einem Ende des Körpers (82), die einen nicht kreisförmigen Querschnitt hat und so ausgebildet und angeordnet ist, daß sie ein Werkzeug zum Drehen der Kappe relativ zu dem Vergaser aufnehmen kann, wobei ein Mitnehmer in dem Kanal (86), wenn der Körper teleskopartig auf dem Schaft (60) in einer zu der ersten und zweiten Position axial beabstandeten dritten Position angeordnet ist, den Schaft erfaßt, um den Körper und den Schaft in der dritten Position gemeinsam mit ihm zu drehen, um den Kraftstoffdurchfluß des Vergasers einzustellen, und ein in dem Kanal angeordneter Riegel, der so ausgebildet und angeordnet ist, daß er den Schaft verriegelt, wenn sich der Körper in der zweiten Position befindet, um ein Lösen der Kappe vom Ventil zu erschweren.

19. Verfahren zum Einstellen des Kraftstoffdurchflusses eines Vergasers und zum Begrenzen einer weiteren Verstellung, bei dem:
(a) ein Vergaser (34) mit mindestens einem Ventil (36) zum Einstellen des Kraftstoffdurchflusses durch Drehen eines vom Vergaser abstehenden Ventilschaftes (60) bereitgestellt wird;
(b) der Vergaser in einem Prüfstand angeordnet und der Schaft gedreht wird, um den Kraftstoffdurchfluß auf einen vorgegebenen Sollwert einzustellen, und das dadurch gekennzeichnet ist, daß
(c) eine Begrenzerkappe (40) gemäß Anspruch (1) mit einem einen Kanal (86) enthaltenden Körper (82) bereitgestellt wird, der so ausgebildet und angeordnet ist, daß er teleskopartig auf ein Ende des Schaftes aufgesetzt wird, wobei der Körper aufweist: einen in dem Kanal vorgesehenen ersten Halter (94), der so ausgebildet und angeordnet ist, daß er den Körper in einer ersten Position auf dem Schaft hält, während der Schaft bezüglich des Körpers frei drehbar ist, einen in dem Kanal vorgesehenen zweiten Halter (100), der so ausgebildet und angeordnet ist, daß er den Schaft erfaßt, wenn der Körper teleskopartig auf dem Schaft in einer zweiten Position angeordnet ist, die zu der ersten Position axial beabstandet ist, um den Schaft mit dem Körper fest zu verbinden und den Körper in der zweiten Position permanent zu halten, so daß der Schaft und der Körper nur gemeinsam drehbar sind, wenn sich der Körper in der zweiten Position befindet, einen Arm, der an dem Körper festgelegt ist und von diesem radial vorsteht, und so ausgebildet und angeordnet ist, daß er das Ausmaß der Drehung des Schaftes auf weniger als eine Umdrehung begrenzt, wenn der Körper teleskopartig auf dem Schaft in der zweiten Position durch Anlage des Arms an mindestens einem vom Vergaser getragenen Anschlag angeordnet ist, und ein Orientierungselement (118;134;142), das dem Körper zugeordnet und so ausgebildet und angeordnet ist, daß es den Arm der Kappe relativ zu dem Ventilschaft und dem dem Arm zugeordneten Anschlag winkelmäßig ausrichtet, wenn sich die Kappe in der ersten Position auf dem Schaft befindet, und während die Kappe von der ersten Position in die zweite Position auf dem Schaft bewegt wird, um den Schaft mit dem Körper der Kappe in einer vorgegebenen winkelmäßigen Ausrichtung permanent zu verbinden,
(d) die Kappe auf dem Schaft positioniert wird, wobei der Körper auf dem Schaft in der ersten Position teleskopartig angeordnet ist;
(e) der Vergaser an einem Motor, bei dem er verwendet werden soll, angebracht wird;
(f) danach bei Betrieb des Motors weitere erforderliche Verstellungen des Ventils durch Drehen des Schaftes durchgeführt werden, um den Kraftstoffdurchfluß fein abzustimmen, um dadurch vorgegebene Betriebsparameter des Motors zu optimieren;
(g) das Orientierungselement dazu benutzt wird, die Kappe, wenn sie sich in der ersten Position am Schaft befindet, in eine vorgegebene Winkellage bezüglich der fein abgestimmten Kraftstoffdurchfluß-Position des Schaftes als Folge des Schrittes (e) winkelmäßig auszurichten, und
(h) der Körper nach dem Schritt (g) in die zweite Position an dem Schaft bewegt wird, um dadurch das Ausmaß einer anschließenden Verstellung des Ventils durch den Arm der Kappe zu begrenzen, der an mindestens einem vom Vergaser getragenen Anschlag anliegt und in der gekrümmten Bewegungsbahn des Arms zumindest dann angeordnet ist, wenn sich die Kappe in der zweiten Position auf dem Schaft befindet.

20. Verfahren nach Anspruch 19, dadurch gekennzeichnet, daß, nachdem die Kappe (40) in der ersten Position auf dem Schaft (60) angeordnet ist und ehe die Feinabstimmung des Vergasers vorgenommen wird, die Schritte, den Vergaser (34) mit einer Verkleidung (52) zu umgeben, die ein Zugangsloch enthält, welches zu dem Schaft beabstandet und axial ausgerichtet ist, wenn die Verkleidung in einer vorgegebenen Position angeordnet ist, und danach ohne Entfernen der Verkleidung die Schritte (f), (g) und (h) durchgeführt werden.

21. Verfahren nach Anspruch 19, dadurch gekennzeichnet, daß in dem Kanal (86) des Körpers (82) ein Mitnehmerelement angeordnet ist, das so ausgebildet ist, daß es den Schaft (60) lösbar erfaßt, wenn der Körper teleskopartig auf dem Schaft in einer zu der ersten und zweiten Position axial beabstandeten dritten Position angeordnet ist, um den Schaft mit dem Körper lösbar zu kuppeln, so daß die Kappe (40) den Schaft drehen kann, wenn sich der Körper in der dritten Position befindet, daß der Körper auf den Schaft in die dritte Position bewegt wird, daß sowohl die Kappe und der Ventilschaft gemeinsam gedreht werden, um den Kraftstoffdurchfluß zu verstellen, bis sich der Arm (84) des Körpers an dem vom Vergaser getragenen einen Anschlag (90) anlegt, daß die Kappe in die erste Position auf dem Schaft bewegt wird, daß die Kappe relativ zu dem Ventilschaft frei gedreht wird, um den Arm von dem vom Vergaser getragenen einen Anschlag wegzudrehen, daß die Kappe in die dritte Position auf dem Schaft bewegt wird, daß die Kappe und der Ventilschaft gemeinsam gedreht werden, um den Kraftstoffdurchfluß zu verstellen, und daß danach die Kappe in die zweite Position auf dem Schaft bewegt wird.

22. Verfahren nach Anspruch 19, dadurch gekennzeichnet, daß der Kopf (62) des Schaftes (60) eine nicht kreisförmige Ausnehmung (68) aufweist, die sich in axialer Richtung öffnet, und daß beim Durchführen des Schrittes (f) ein Einstellwerkzeug (122) axial durch das freie Ende der Kappe (40) in Eingriff mit der Ausnehmung im Kopf des Ventils bewegt wird, um weitere erforderliche Verstellungen des Ventils durchzuführen, indem der Schaft auf dem Ventil gedreht wird, während sich die Kappe auf diesem in der ersten Position befindet.

23. Verfahren nach Anspruch 19, dadurch gekennzeichnet, daß ehe die Kappe (40) in der ersten Position auf dem Schaft (60) angeordnet ist und ehe die Feinabstimmung des Vergasers durchgeführt ist, die Schritte, den Ventilschaft mit einer Verkleidung (52) zu versehen, die eine Zugangsöffnung enthält, welche zu dem Schaft beabstandet und axial ausgerichtet ist, wenn die Verkleidung auf dem Vergaser angeordnet ist, die Kappe durch die Zugangsöffnung danach einzuführen und die Kappe in der ersten Position auf dem Schaft und innerhalb der Verkleidung anzuordnen, und danach, ohne Entfernen der Verkleidung, die Schritte (f), (g) und (h) durchgeführt werden.

## Revendications

1. Bouchon (40 ; 42) destiné à limiter le réglage du débit de carburant dans un carburateur (34) qui est établi par une soupape (36 ; 38) ayant une queue tournante (60) comportant une extrémité de tête (62) dépassant du carburateur, comprenant : un corps (82) ayant, en lui, un passage (86) réalisé pour être reçu, par emboîtement, par-dessus l'extrémité de tête de la queue de la soupape, une première pièce de retenue (94) établie dans ledit passage et réalisée pour retenir ledit corps dans une première position d'emboîtement sur la queue, la queue pouvant tourner librement par rapport audit corps, une patte (84) fixée audit corps et en saillie, à partir de celui-ci et de façon globalement radiale, et pouvant être mise en prise par au moins une butée (90), et caractérisé par une seconde pièce de retenue (100) établie dans ledit passage et réalisée pour coopérer avec l'extrémité de tête lorsque ledit corps emboîte la queue dans une seconde position, espacée axialement de ladite première position, permettant de retenir, rigidement, ledit corps sur la queue dans la seconde position de sorte que la queue et ledit corps ne peuvent tourner qu'en même temps et ladite patte limite l'étendue de la rotation de la queue à moins d'un tour lorsque ledit corps se trouve dans ladite seconde position, par coopération de ladite patte (84) avec ladite au moins une butée (90) associée en fonctionnement à celle-ci, et un élément d'orientation (118 ; 134 ; 142) raccordé audit corps et réalisé pour orienter angulairement ladite patte dudit bouchon par rapport à la queue de la soupape et à ladite au moins une butée associée en fonctionnement à ladite patte lorsque le bouchon se trouve dans ladite première position sur la queue et tandis que le bouchon est déplacé à la seconde position sur la queue afin de fixer la queue avec le corps du bouchon selon une orientation angulaire prédéterminée, dans lequel lorsque ledit corps emboîte la queue et se trouve dans ladite première position, la queue peut tourner pour régler le débit de carburant et l'élément d'orientation (118 ; 134 ; 142) orientera angulairement le corps par rapport à la queue et à la butée afin d'établir les limites désirées de tout réglage subséquent après que le corps se trouve dans la seconde position, et lorsqu'il se trouve dans ladite seconde position, ledit corps et la queue coopèrent rigidement et ne peuvent tourner qu'en même temps, ladite patte pouvant être mise en prise par ladite au moins une butée de manière à limiter la rotation de la queue et du bouchon à moins d'un tour complet afin, ainsi, de permettre et de limiter, de façon permanente, le réglage ultérieur de la soupape.

2. Bouchon selon la revendication 1, caractérisé en ce que ledit élément d'orientation comprend un goujon d'arrêt (118) monté sur ledit corps (82), en saillie, à partir de celui-ci, de façon radiale vers l'extérieur, et réalisé et disposé pour coopérer avec un goujon d'arrêt complémentaire (120) d'un autre bouchon reçu sur une queue tournante (60) d'une autre soupape lorsque ledit goujon d'arrêt et un autre goujon d'arrêt coopèrent en fonctionnement.

3. Bouchon selon la revendication 1, caractérisé en ce que ledit élément d'orientation comprend une âme relativement mince (134) raccordée audit bouchon (110') et à un autre bouchon (112') reçu sur une queue tournante (60) d'une autre soupape.

4. Bouchon selon la revendication 1, caractérisé en ce que ledit élément d'orientation comprend un ressort (142) reçu dans le bouchon (140) avec une extrémité raccordée au bouchon et l'autre extrémité raccordée à la tête de la queue de la soupape.

5. Bouchon selon la revendication 1, caractérisé en ce que ledit élément d'orientation comprend un ressort (142) reçu dans le bouchon (140) et a une extrémité reçue dans un trou complémentaire (148) du bouchon et l'autre extrémité reçue dans une gorge (68) de la tête de la queue de la soupape.

6. Bouchon selon la revendication 1, caractérisé en ce que ledit passage (86) s'étend complètement à travers ledit corps (82) et est réalisé et disposé de manière à permettre à un outil de réglage d'y être disposé et d'être en prise avec un évidement (68) pratiqué dans l'extrémité de tête (62) de la queue (60) ayant une section droite non circulaire permettant de faire tourner la queue par rapport au carburateur lorsque le bouchon est reçu par emboîtement sur la queue.

7. Bouchon selon la revendication 1, caractérisé en ce que ledit passage (86) s'étend complétement à travers ledit corps (82) et est réalisé et disposé de manière à permettre à un outil de réglage d'y être disposé et d'être en prise avec une rainure (68) pratiquée dans l'extrémité de tête (62) de la queue afin de faire tourner la queue par rapport au carburateur lorsque le bouchon est reçu par emboîtement sur la queue.

8. Bouchon selon la revendication 1, caractérisé par un évidement (88) pratiqué dans une extrémité dudit corps (82), ayant une section droite non circulaire et réalisé et disposé de manière à y recevoir un outil destiné à faire tourner le bouchon par rapport au carburateur.

9. Bouchon selon la revendication 1 ou 8, dans lequel lorsque ledit corps (82) emboîte la queue (60) et se trouve dans une troisième position axialement déplacée par rapport auxdites première et seconde positions, ledit corps (82) coopère, par entraînement, avec la queue, de sorte que la rotation dudit corps fait également tourner la queue en même temps que celui-ci afin de régler le débit de carburant du carburateur.

10. Bouchon selon la revendication 1 ou 8, caractérisé par un dispositif d'entraînement établi dans ledit passage (86) et réalisé et disposé pour coopérer avec la queue (60) afin de faire tourner, par entraînement, la queue en même temps que la rotation dudit corps (82) lorsque ledit corps emboîte la queue et se trouve dans une troisième position sur celle-ci, axialement espacée à la fois desdites première et seconde positions, dans lequel lorsque ledit corps se trouve dans la troisième position, la rotation dudit bouchon sous l'action d'un outil disposé dans ledit évidement dudit corps fait tourner, par entraînement, la queue (60) de la soupape afin de régler le débit de carburant du carburateur.

11. Bouchon selon la revendication 1, caractérisé par un cran de positionnement (92) à la périphérie extérieure de ladite patte (84) et destiné à faciliter, pour son assemblage, le positionnement et l'orientation du bouchon.

12. Bouchon selon la revendication 1, caractérisé par au moins une butée (90) montée sur le carburateur comprenant une queue (60) d'une autre soupape de réglage de débit de carburant du carburateur, qui dépasse dans la trajectoire incurvée décrite par la rotation de ladite patte (84) dudit corps au moins lorsque ledit corps (82) se trouve dans sa seconde position.

13. Bouchon selon la revendication 1, caractérisé par au moins une butée (90) montée sur le carburateur comprenant un corps d'un autre bouchon limiteur reçu, par emboîtement, par-dessus une queue (60) d'une autre soupape de réglage de débit de carburant du carburateur, qui dépasse dans la trajectoire incurvée décrite par la rotation de ladite patte (84) dudit corps au moins lorsque ledit corps se trouve dans sa seconde position.

14. Bouchon selon la revendication 1, caractérisé par lesdits corps (82), patte (84) et élément d'orientation (118 ; 134) constituant une pièce homogène unique en matière plastique qui est au moins quelque peu élastique.

15. Bouchon selon la revendication 1, caractérisé par une enveloppe de protection (52) montée sur le carburateur (34), ceinturant les soupapes (36, 38) et les bouchons (40, 42) reçus sur celles-ci, espacée de la périphérie des bouchons et reposant de façon étroitement contiguë à celle-ci, et débouchant, de façon globalement radiale vers l'extérieur, afin d'offrir un accès aux extrémités libres des bouchons.

16. Bouchon selon la revendication 1, caractérisé en ce que lesdits corps (82) et bras (84) constituent une pièce homogène unique en matière plastique de nylon ou de polyxométhylène qui est au moins quelque peu élastique.

17. Bouchon selon la revendication 1, caractérisé en ce que ladite seconde pièce de retenue (100) est en ajustage serré avec la queue (60) lorsque ledit corps (82) se trouve dans ladite seconde position sur la queue.

18. Bouchon selon la revendication 1, caractérisé par un évidement (88) pratiqué dans une extrémité dudit corps (82), ayant une section droite non circulaire et réalisé et disposé de manière à y recevoir un outil destiné à faire tourner le bouchon par rapport au carburateur, et dans lequel lorsque ledit corps emboîte la queue (60) et se trouve dans une troisième position axialement espacée desdites première et seconde positions, un dispositif d'entraînement établi dans ledit passage (86) coopère avec la queue pour faire tourner en même temps ledit corps et la queue avec celui-ci lorsqu'il se trouve dans ladite troisième position afin de régler le débit de carburant du carburateur, et un cliquet établi dans ledit passage et réalisé et disposé de manière à être encliqueté avec la queue lorsque ledit corps se trouve dans ladite seconde position afin de ralentir le retrait du bouchon de la soupape.

19. Procédé de réglage du débit de carburant d'un carburateur et de limitation de son réglage ultérieur, comprenant :
(a) l'implantation d'un carburateur (34) ayant au moins une soupape (36) destinée à régler le débit de carburant en faisant tourner une queue (60) de la soupape, qui dépasse du carburateur,
(b) la mise en place du carburateur sur un banc d'essai et la rotation de la queue afin de régler le débit de carburant à une soupape prédéterminée désirée, et caractérisé par
(c) l'implantation d'un bouchon limiteur (40) selon la revendication 1 ayant, en lui, un passage (86) réalisé et disposé pour être reçu, par emboîtement, par-dessus une extrémité de la queue, le corps ayant une première pièce de retenue (94) établie dans le passage et réalisée et disposée pour retenir le corps dans une première position sur la queue, la queue pouvant tourner librement par rapport au corps, une seconde pièce de retenue (100) établie dans ledit passage et réalisée et disposée pour coopérer avec la queue lorsque le corps emboîte la queue et se trouve dans une seconde position, espacée axialement de la première position, permettant d'accoupler rigidement la queue au corps et de retenir le corps de façon permanente dans la seconde position, de sorte que la queue et ledit corps ne puissent tourner qu'en même temps lorsque le corps se trouve dans la seconde position, une patte fixée au corps et en saillie, à partir de celui-ci et de façon globalement radiale, et réalisée et disposée pour limiter l'étendue de la rotation de la queue à moins d'un tour lorsque le corps emboîte la queue et se trouve dans la seconde position par la mise en prise de la patte par au moins une butée montée sur le carburateur, et un élément d'orientation (118 ; 134 ; 142) associé en fonctionnement audit corps et réalisé et disposé pour orienter angulairement ladite patte dudit bouchon par rapport à la queue de la soupape et à ladite au moins une butée associée en fonctionnement à ladite patte lorsque le bouchon se trouve dans ladite première position sur la queue et tandis que le bouchon est déplacé de la première position à la seconde position sur la queue afin d'accoupler, de façon permanente, la queue au corps du bouchon selon une orientation angulaire prédéterminée,
(d) le positionnement du bouchon sur la queue, le corps emboîtant la queue et se trouvant dans sa première position sur la queue,
(e) le montage du carburateur sur un moteur avec lequel il sera utilisé,
(f) après quoi, pendant la mise en fonctionnement du moteur, la réalisation de tout réglage ultérieur nécessaire de la soupape en faisant tourner la queue afin de réaliser l'ajustement fin du débit de carburant en vue d'optimiser les paramètres de fonctionnement prédéterminés du moteur,
(g) l'utilisation de l'élément d'orientation permettant d'orienter angulairement le bouchon tandis qu'il se trouve dans la première position sur la queue, selon une position angulaire prédéterminée par rapport à la position de débit de carburant finement ajusté de la queue résultant de l'étape (f), et
(h) après l'étape (g), le déplacement du corps à la seconde position sur la queue afin de limiter ainsi la portée de tout réglage subséquent de la soupape par la patte du bouchon supportant au moins une butée montée sur le carburateur et disposée sur la trajectoire incurvée décrite par le déplacement de la patte au moins tandis que le bouchon se trouve dans la seconde position sur la queue.

20. Procédé selon la revendication 19, caractérisé par, après la disposition du bouchon (40) dans la première position sur la queue (60) et avant l'ajustement fin du carburateur, les étapes consistant à disposer une enveloppe de protection (52) autour du carburateur (34), qui possède, en elle, un trou d'accès espacé de la queue et aligné, globalement de façon axiale, avec celle-ci, lorsque l'enveloppe de protection est disposée dans une position prédéterminée et ensuite, sans retirer l'enveloppe de protection, les étapes (f), (g) et (h) sont réalisées.

21. Procédé selon la revendication 19, caractérisé par un dispositif d'entraînement établi dans le passage (86) du corps (82) et disposé pour coopérer, de façon amovible, avec la queue (60) lorsque le corps emboîte la queue et se trouve dans une troisième position axialement espacée des première et seconde positions, afin d'accoupler, de façon amovible, la queue au corps, de sorte que le bouchon (40) peut faire tourner la queue lorsque le corps se trouve dans la troisième position, déplaçant le corps par-dessus la queue à la troisième position, faisant tourner à la fois le bouchon et la queue de soupape en même temps afin de régler le débit de carburant jusqu'à ce que la patte (84) du corps vienne en butée contre au moins une butée (90) montée sur le carburateur, déplaçant le bouchon à la première position sur la queue, faisant tourner librement le bouchon par rapport à la queue de soupape de manière à faire tourner la patte en l'éloignant d'au moins une butée montée sur le carburateur, déplaçant le bouchon à la troisième position sur la queue, faisant tourner le bouchon et la queue de soupape en même temps afin de régler le débit de carburant, et déplaçant ensuite le bouchon à la seconde position sur la queue.

22. Procédé selon la revendication 19, caractérisé par la tête (62) de la queue (60) ayant, en elle, un évidement non circulaire (68) débouchant de façon globalement axiale à celle-ci, et en ce qu'au cours de la réalisation de l'étape (f), un outil de réglage (122) est inséré de façon globalement axiale à travers l'extrémité libre du bouchon (40) et en coopération d'entraînement avec l'évidement pratiqué dans la tête de la soupape pour procéder à tout réglage ultérieur nécessaire de la soupape en faisant tourner la queue de la soupape tandis que le bouchon est reçu dans la première position sur celle-ci.

23. Procédé selon la revendication 19, caractérisé par, avant que le bouchon (40) soit disposé dans la première position sur la queue (60) et avant l'ajustement fin du carburateur, les étapes consistant à disposer une enveloppe de protection (52) autour de la queue de soupape, qui possède, en elle, une ouverture espacée de la queue et alignée, de façon globalement axiale, avec celle-ci lorsque l'enveloppe de protection est disposée sur le carburateur, l'insertion, par la suite, du bouchon à travers l'ouverture d'accès et la disposition du bouchon dans la première position sur la queue et à l'intérieur de l'enveloppe de protection, et la réalisation, ensuite, sans retirer l'enveloppe de protection, des étapes (f), (g) et (h).
